(19) Europäisches Patentamt
European Patent Office
Office européen des brevets

(11) **EP 3 891 411 B1**

(12) **EUROPÄISCHE PATENTSCHRIFT**

(45) Veröffentlichungstag und Bekanntmachung des Hinweises auf die Patenterteilung:
**20.09.2023  Patentblatt 2023/38**

(21) Anmeldenummer: **19849017.9**

(22) Anmeldetag: **04.12.2019**

(51) Internationale Patentklassifikation (IPC):
*F16D 55/224* (2006.01)

(52) Gemeinsame Patentklassifikation (CPC):
**F16D 55/2245; B23Q 16/105;** F16D 65/22;
F16D 2121/12

(86) Internationale Anmeldenummer:
**PCT/DE2019/000313**

(87) Internationale Veröffentlichungsnummer:
**WO 2020/114535 (11.06.2020 Gazette 2020/24)**

(54) **BREMS- UND/ODER KLEMMVORRICHTUNG MIT EINER BETÄTIGUNGS- UND EINER WELLENANBINDUNGSBAUGRUPPE**

BRAKING AND/OR CLAMPING DEVICE HAVING AN ACTUATING ASSEMBLY AND A SHAFT-COUPLING ASSEMBLY

DISPOSITIF DE FREINAGE ET/OU DE SERRAGE COMPRENANT UN MODULE D'ACTIONNEMENT ET UN MODULE D'ACCOUPLEMENT D'ARBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2018  DE 102018009513**

(43) Veröffentlichungstag der Anmeldung:
**13.10.2021  Patentblatt 2021/41**

(73) Patentinhaber:
• **Zimmer, Martin**
  **77866 Rheinau (DE)**
• **Zimmer, Günther**
  **77866 Rheinau (DE)**

(72) Erfinder:
• **Zimmer, Martin**
  **77866 Rheinau (DE)**
• **Zimmer, Günther**
  **77866 Rheinau (DE)**

(74) Vertreter: **Thämer, Wolfgang**
  **Zürn & Thämer**
  **Patentanwälte**
  **Hermann-Köhl-Weg 8**
  **76571 Gaggenau (DE)**

(56) Entgegenhaltungen:
**EP-A1- 3 403 758    DE-A1- 2 106 009**

**Beschreibung**

Die Erfindung betrifft eine Brems- und/oder Klemmvorrichtung für eine gegenüber einem Grundkörper geführte Welle mit einer Betätigungsbaugruppe und mit einer Wellenanbindungsbaugruppe. Die Betätigungsbaugruppe weist ein Spaltgehäuse auf, das eine Anbauzone und eine bereichsweise elastisch beulbare Biegezone mit zwei über einen Spaltraum beabstandete Biegeplatten hat. Die Biegeplatten haben in zwei einander gegenüberliegenden Klemmzonen jeweils Zangenbacken mit Reibflächen, deren Flächennormalen nach innen gerichtet sind. Die Wellenanbindungsbaugruppe hat einen Kupplungsbereich, der zwei voneinander beabstandete Reibflächen hat, deren Flächennormalen nach außen weisen. Die Wellenanbindungsbaugruppe weist einen Flanschbereich auf, über den sie entweder direkt oder indirekt über einen Spannmechanismus an der Welle angeordnet ist. Bei entlastetem Spaltraum sind die Reibflächen der Betätigungsbaugruppe an den Reibflächen der Wellenanbindungsbaugruppe unter Bereitstellung der Klemm- und/oder Bremskraft angelegt.

Die DE 10 2016 009 581 B3 und DE 10 2017 004 403 B4 beschreiben eine Brems- und/oder Klemmvorrichtung mit einer Betätigungs- und einer Wellenanbindungsbaugruppe. Die Vorrichtung weist zwei zu einem Spaltgehäuse einteilig verbundene beulbare Biegeplatten auf, zwischen denen ein spaltartiger Druckraum angeordnet ist. Die Biegeplatten umgreifen eine Bremsscheibe von außen. Sie liegen dabei axial an der Bremsscheibe an, sofern der Druckraum druckentlastet ist.

Aus der DE 21 06 009 A1 ist eine Lagerungseinheit mit Klemmung bekannt. Dabei ist in der Nabe eines Schneckenrades eine ortsfest fixierte Bremsscheibe wälzgelagert angeordnet. Der Scheibenabschnitt der Bremsscheibe besteht aus zwei Biegeplatten, die zusammen mit einer Radialdichtung einen spaltförmigen Druckraum ausbilden. Zum Abbremsen des Schneckenrades wird der Druckraum mit einem Druckmedium befüllt.

Der vorliegenden Erfindung liegt die Problemstellung zugrunde, eine derartige Brems- und/oder Klemmvorrichtung zu entwickeln, die auch bei einem großen Durchmesser eine geringe Baubreite aufweist, aus wenigen Bauteilen besteht und zudem einstellbar, einfach, sicher und wartungsfrei funktioniert.

Diese Problemstellung wird mit den Merkmalen des Hauptanspruchs gelöst. Dabei weist jede Biegeplatte - zur Lagerung mindestens eines Stützelements - vom Spaltraum aus eine Axialnut auf. Zwischen den Biegeplatten und dem mindestens einen Stützelement liegt ein abgedichteter Spaltraum, der zum elastischen Auseinanderdrücken der Reibflächen mit einem Druckmedium befüllbar ist. Die Wellenanbindungsbaugruppe weist als Bremsscheibe einen geschlitzten oder mehrfach geteilten Ring auf.

Der Gegenstand der vorliegenden Erfindung ist eine mindestens zweiteilige Brems- und/oder Klemmvorrichtung für Wellen. Das eine Teil wird als Adapter auf die rotierende Welle montiert und an dieser festgeklemmt oder festgeschraubt. Das andere Teil ist eine Art von Zange, die an einem ortsfesten, z.B. die vorgenannte Welle lagernden Maschinenteil befestigt ist. Die Zange hat zwei an je einer Biegeplatte angeordnete z.B. ringförmige Zangenbacken, mit denen sie die Stirnseiten des wellenseitigen Flansches lose umfassen oder drehfest umgreifen kann. Die die Welle bremsenden oder klemmenden Vorrichtungsteile liegen nicht auf der in Radialrichtung orientierten Außenwandung der Welle an.

Die die Zangenbacken tragenden Biegeplatten der Vorrichtung lassen sich vereinfacht als zwei Tellerfedern beschreiben, deren beiden Innenränder einander zugewandt sind, während die im Durchmesser größeren Außenränder in Axialrichtung weit auseinanderliegen. Zwischen den Innenrändern, die eine Klemmzone bilden, ist eine ein- oder mehrteilige Bremsscheibe angeordnet. Werden nun die Außenränder, die die Anbauzone darstellen, in Axialrichtung aufeinander zubewegt, klemmen die im Durchmesser kleineren Innenränder die Bremsscheibe zum Halten federgespannt zangenartig ein. Die Tellerfedern werden bei der Herstellung im Bereich der Außenränder aneinander angeformt, sodass sich der Abstand der Außenränder nicht mehr ändern lässt. Um nun die eingeklemmte Bremsscheibe wieder freizugeben, werden die Tellerfedern mit Öldruck auseinandergepresst. Die Innenränder lösen sich von der Bremsscheibe. Die bisher zum Klemmen wenig vorgespannten Tellerfedern werden somit zum Lösen noch stärker gespannt bzw. verformt.

Alternativ lässt sich die Vorrichtung auch so gestalten, dass das Spaltgehäuse an der rotierenden Welle angeordnet ist, während die Bremsscheibe ortsfest gelagert in den nach radial außen offenen Spaltraum hineinragt.

Die Brems- und/oder Klemmvorrichtung weist drei verschiedene, einfach aufgebaute Wellenanbindungsbaugruppen auf. Jede Wellenanbindungsbaugruppe basiert auf einem an der rotierenden Welle vorhandenen Wellenbund oder Flansch und auf einer ein- oder mehrteiligen Bremsscheibe. Die einteilige Bremsscheibe ist ein offener Ring, der vergleichbar mit einem in einer Bohrung anordenbaren Sicherungsring unter einem elastischen Verringern seines Außendurchmessers in eine entsprechende Nut eingesetzt wird, wobei hier anstelle der Nut der Spaltraum des Spaltgehäuses gesehen wird. Eine andere mehrteilige Bremsscheibe besteht aus teilweise drei oder mehr unterschiedlich großen Teilstücken, die nahezu fugenlos aneinandergesetzt werden. Eine weitere Bremsscheibenvariante setzt sich aus drei oder mehr jeweils gleichförmigen Teilstücken zusammen, die untereinander jeweils durch millimeterbreite Spalte getrennt sind. Die Spalte können dabei radial oder tangential verlaufen. Die durch die Spalte gebildete Montagefuge kann hierbei geradlinig, sichel- oder kreisbogenförmig ausgeführt sein. Die Montagefuge kann zudem jede beliebige andere Form annehmen, wobei sie auch einen oder mehrere Knicke aufweisen darf.

Weitere Einzelheiten der Erfindung ergeben sich aus den Unteransprüchen und der nachfolgenden Beschreibung mehrerer schematisch dargestellter Ausführungsformen.

Figur 1:     perspektivische Ansicht einer Brems- und/oder Klemmvorrichtung;

Figur 2:     Teilquerschnitt zu Figur 1, betätigt und mit Welle;

Figur 3:     wie Figur 2, jedoch unbetätigt;

Figur 4:     Teilquerschnitt der Doppellippendichtung und des Stützelements, vergrößert;

Figur 5:     halbe Ansicht des Spaltgehäuses mit Einfädelnut in einem Ausschnitt;

Figur 6:     Teillängsschnitt des Stützelements, vergrößert;

Figur 7:     perspektivische Ansicht einer radial geteilten Bremsscheibe;

Figur 8:     perspektivische Ansicht einer ungleich geteilten Bremsscheibe;

Figur 9:     perspektivische Ansicht einer einfachgeschlitzten Bremsscheibe;

Figur 10:    perspektivische Ansicht zu Figur 9 mit Ausgleichsgewicht.

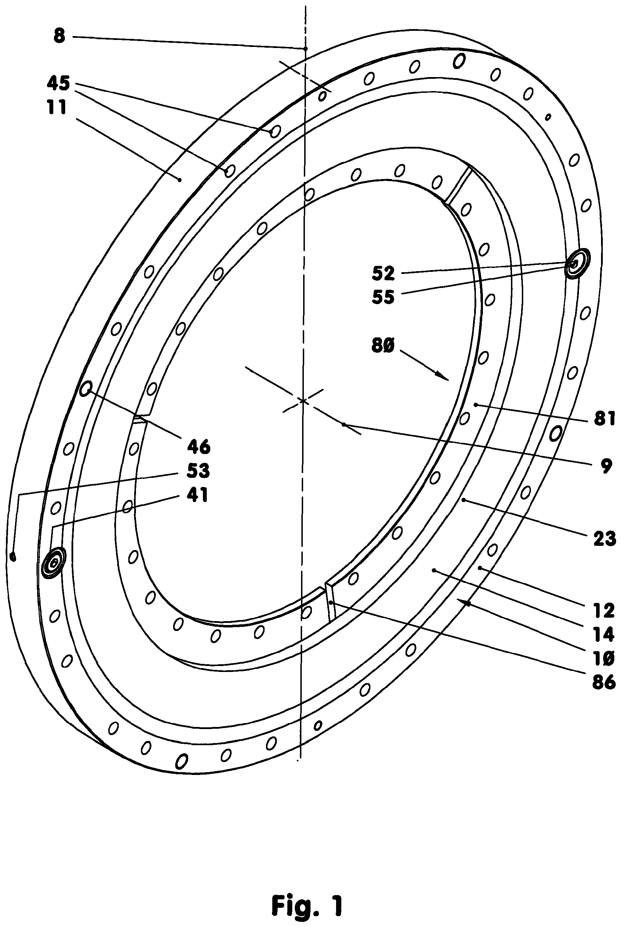

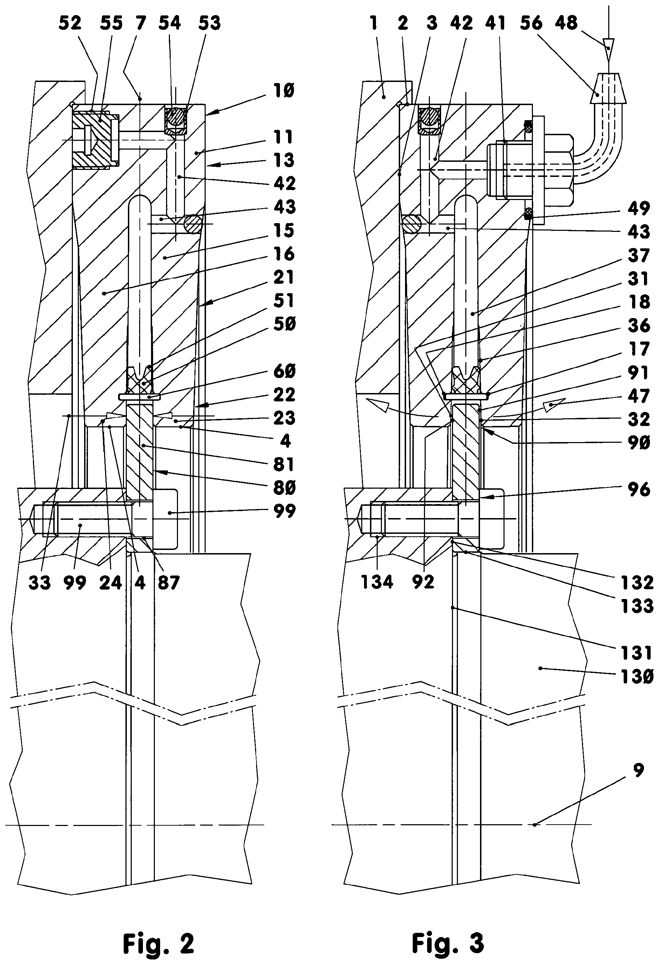

Die Figur 1 zeigt die Brems- und/oder Klemmvorrichtung ohne den tragenden maschinenseitigen Grundkörper (1), vgl. Figur 2 und 3, und ohne die abzubremsende und/oder festzuklemmende Welle (130). Die außenliegende, die Welle (130) umgebende Betätigungsbaugruppe (10) hat eine rückseitige Anbaufläche (3), über die sie mittels Schrauben - nicht dargestellt - am Grundkörper (1) angeschraubt wird. Die Betätigungsbaugruppe (10) umgibt eine Wellenanbindungsbaugruppe (80), die hier aus einer mehrfach geteilten Bremsscheibe (81) besteht. Die Bremsscheibe (81) ist mittels der Schrauben (99) an der Welle (130) drehstarr befestigt. Die Betätigungsbaugruppe (10) hat ein elastisches Spaltgehäuse (11), das mit seinen Zangenbacken (23, 24) - beim Bremsen oder Klemmen - zangenartig an der Bremsscheibe (81) anliegt. Das Spaltgehäuse (11) umschließt zusammen mit einem Dichtring (50) und einem Stützelement (60) einen Druckraum (37). Wird Letzterer mit einem gasförmigen, flüssigen oder gelartigen Druckmittel beaufschlagt, löst sich die zangenartige Umklammerung der Bremsscheibe (81).

Der Druckraum (37), vgl. Figur 2, hat ein Volumen, das kleiner ist als 12,5 Prozent des Hüllvolumens der Betätigungsbaugruppe (10). Das Hüllvolumen der in den Figuren dargestellten Variante dieser Betätigungsbaugruppe (10), entspricht einem gegebenen Volumen eines Rohrkörpers, der als Rohrlänge die Vorrichtungsbreite, als Außendurchmesser den äußeren Vorrichtungsdurchmesser und als Innendurchmesser den minimalen Innendurchmesser der Biegeplatten (15, 16) hat.

Die Betätigungsbaugruppe (10) weist ein ring- bzw. rohrförmiges Spaltgehäuse (11) auf, das den z.B.

schmalspaltigen ringförmigen Druckraum (37) umschließt. Das Spaltgehäuse (11) ist im unverformten Zustand im Wesentlichen eine ebene Scheibe mit einem Innendurchmesser von z.B. ca. 280 mm und einem Außendurchmesser von z.B. 388 mm. Die maximale Dicke der Scheibe liegt z.B. bei 22 mm. Sie entspricht der oben genannten Vorrichtungsbreite. Das Spaltgehäuse (11) ist aus einem Vergütungsstahl, z.B. 42CrMoS4, gefertigt. Es ist in drei Bereiche (13, 21, 22) aufgeteilt, die in Radialrichtung aneinander anschließen. Der innere Bereich sind die Klemmzonen (22). An sie schließt sich jeweils eine in Radialrichtung weiter außenliegende Biegezone (21) an. Beide Biegezonen (21) münden in einen äußeren Bereich, also die Anbauzone (13).

Das Spaltgehäuse (11) wird zur Herstellung des Spaltraumes (37) von seiner zentralen Bohrung (4) aus mittig zwischen den Stirnseiten ausgefräst. Dazu wird z. B. ein Scheibenfräser verwendet. Die ausgefräste, z.B. 38,7 mm tiefe Nut hat eine Spaltbreite von z.B. 4 mm. Der rinnenförmige Nutgrund hat zum Minimieren von Kerbspannungen hier einen Radius von 2 mm. Im bohrungsnahen Bereich der Bohrung (4) ist die Spaltraumnut 16,5 mm tief in der Feinbearbeitungszone (36) auf 4,3 mm verbreitert.

Die Anbauzone (13), in die der Spaltraum (37) nicht oder nur 1 bis 10 mm hineinragt, hat z.B. beidseitig eine zumindest bereichsweise plane Stirnfläche, über die das Spaltgehäuse (11) an einer Anbaufläche (3) des Grundkörpers (1) anlegbar ist, vgl. Figuren 3 und 2. Nur beispielhaft kontaktiert das Spaltgehäuse (11) auch die grundkörperseitige Zentrierung (2). Die Anbauzone (13) weist für die Befestigung am Grundkörper (1) auf einem Durchmesser von z.B. 370 mm eine Bohrungsgruppe mit beispielsweise 24 Bohrungen (45) auf. Die Bohrungen (45) sind paarweise zusammengefasst, wobei je zwei Bohrungen - bezogen auf die Mittellinie (9) - einen Winkel von 10 Winkelgrade einschließen. Diese Bohrungen (45) können auch Senk- oder Doppelsenkbohrungen sein.

Auf einem Durchmesser von z.B. 375 mm befinden sich vier Gewindedurchgangsbohrungen (46) mit einem M8-Gewinde, vgl. Figur 1. Sie liegen jeweils um 90 Winkelgrade zueinander geteilt. Zwischen mindestens zwei benachbarten Bohrungspaaren der Bohrungen (45) befindet sich eine Zulaufgewindebohrung (41) und eine Verschlussstopfengewindebohrung (52). Die Bohrungen (41, 52) liegen sich innerhalb der Betätigungsbaugruppe (10) z.B. auf verschiedenen Durchmessern diametral gegenüber. Sie sind entweder auf einer Stirnseite (12) oder (14) der Anbauzone (13) oder auf unterschiedlichen Stirnseiten (12, 14) angeordnet, vgl. Figuren 1, 2 und 3.

Gemäß der Figur 3 befindet sich in der Anbauzone (13) mindestens eine Zulaufgewindebohrung (41) auf der Vorderseite (12) der Betätigungsbaugruppe (10). Das hier verwendete M10-Feingewinde nimmt nach Figur 3 - nur beispielhaft - einen Hydraulikadapter (56) auf. Alternativ kann die Zulaufgewindebohrung (41) mit ihrem Schneidring (49) und dem an ihm anliegenden Dichtring auch auf der Rückseite der Betätigungsbaugruppe (10) liegen, vgl. Figur 1. Der Schneidring (49) unterstützt hier die Dichtwirkung zwischen der Anbaufläche (3) und der Rückseite der Betätigungsbaugruppe (10).

Die Zulaufgewindebohrung (41), vgl. Figur 3, mündet in eine radiale Verteilbohrung (42). Nach außen hin ist diese Verteilbohrung (42) durch eine Klemmbüchse (53) verschlossen. In die Bohrung der Klemmbüchse (53) ist eine Stauchkugel (54) eingestemmt, die die Klemmbüchse (53) in der einzelnen radialen Verteilbohrung (42) öl- oder gasdicht dauerhaft fixiert. Die radiale Verteilbohrung (42) trifft z.B. senkrecht auf eine axiale Verteilbohrung (43), die in den Druckraum (37) mündet. Die axiale Verteilbohrung (43) ist zur Anbaufläche (3) hin z.B. mit einer Stauchkugel dicht verschlossen.

Die Verteilbohrungen (42, 43) haben hier einen Durchmesser von 3 mm. Das über den Hydraulikadapter (56) einströmende Hydrauliköl, z.B. ein Öl vom Typ HLP 46 nach DIN 51524, Teil 2, das bei 40° Celsius eine Viskosität von 46 $\pm$ 2 mm²/s aufweist, verteilt sich schnell im Druckraum (37).

Nach Figur 2 befindet sich in der Anbauzone (13) zudem mindestens eine Verschlussstopfengewindebohrung (52), die - z.B. als Entlüftungsbohrung beim Befüllen des Druckraums (37) dient - ebenfalls in eine radiale Verteilbohrung (42) mündet und von dort aus über eine axiale Verteilbohrung (43) mit dem Druckraum (37) verbunden ist. Nach außen hin sind diese Verteilbohrungen in vergleichbarer Weise verschlossen, wie die Verteilbohrungen des Zulaufs.

Die beiden an die Anbauzone (13) angeformten Biegeplatten (15, 16) stellen die elastische Biegezone (21) dar. Die beidseits des Spaltraumes (37) gelegenen, elastisch verformbaren Biegeplatten (15, 16) verjüngen sich - bezüglich ihrer Wandstärke - von außen her in Richtung der zentralen Mittellinie (9). Ihre Wandstärke verringert sich im Ausführungsbeispiel von z.B. 9 auf 7,35 mm. Die Formsteifigkeit der Biegeplatten (15, 16) nimmt somit in Richtung der Klemmzone (22) nahezu stetig ab. Die Übergänge zwischen den Zonen (13) und (21) sind beispielsweise mit großen Radien ausgerundet. Die Biegezone (21) ist gegenüber der Anbauzone (13) zurückgenommen, um die Verformung der Biegezone (21) nicht in die zwischen dem Grundkörper (1) und der Anbauzone (13) gelegene Einbaufuge einzutragen.

Die Biegeplatten (15, 16) der Biegezone (21) gehen zur jeweiligen Wellenanbindungsbaugruppe (80) hin in die beiden Klemmzonen (22) über, die die umlaufenden Zangenbacken (23, 24) darstellen. Die Zangenbacken (23, 24) sind zugleich ein Teil der jeweiligen Biegeplatte (15, 16).

Jede Biegeplatte (15, 16) weist zwischen der Biegezone (21) und der Klemmzone (22) eine umlaufende Axialnut (17, 18) auf. Die Axialnut (17, 18), die beispielsweise einen rechteckigen Querschnitt hat, hat bei einer Breite von z.B. 1,1 mm eine Tiefe von z.B. 1,35 mm. Die beiden Kanten des Axialnutgrunds sind abgerundet. Die der Bohrung (4) nächstgelegene Nutwandung der Axialnut (17, 18) ist im Ausführungsbeispiel 4,5 mm von der Bohrung (4) entfernt. Die einzelne Axialnut (17, 18) wird mit einem Scheibenfräser aus der jeweiligen Biegeplatte (15, 16) herausgearbeitet. Dazu hat der Scheibenfräser einen Außendurchmesser, der geringfügig kleiner ist als der Innendurchmesser der Bohrung (4). Zudem hat der Scheibenfräser vorzugsweise nur drei Zähne, die jeweils rechts und links 1,4 mm über die Fräserscheibe überstehen. Die Fräserscheibe selbst hat eine Wandstärke von 1,0 mm. Zum Erzeugen der Axialnuten (17, 18) wird der Scheibenfräser mit einem Zahn voraus zwischen den Biegeplatten (15, 16) in den Druckraum (37) eingefahren. Bei rotierendem Spaltgehäuse (11) wird der nicht rotierende Scheibenfräser zum Fräsen der Axialnut (17) in Richtung der Biegeplatte (15) zugestellt, um nach deren Fertigstellung in umgekehrter Richtung in die Biegeplatte (16) einzutauchen, um dort wiederum die Axialnut (18) herauszufräsen.

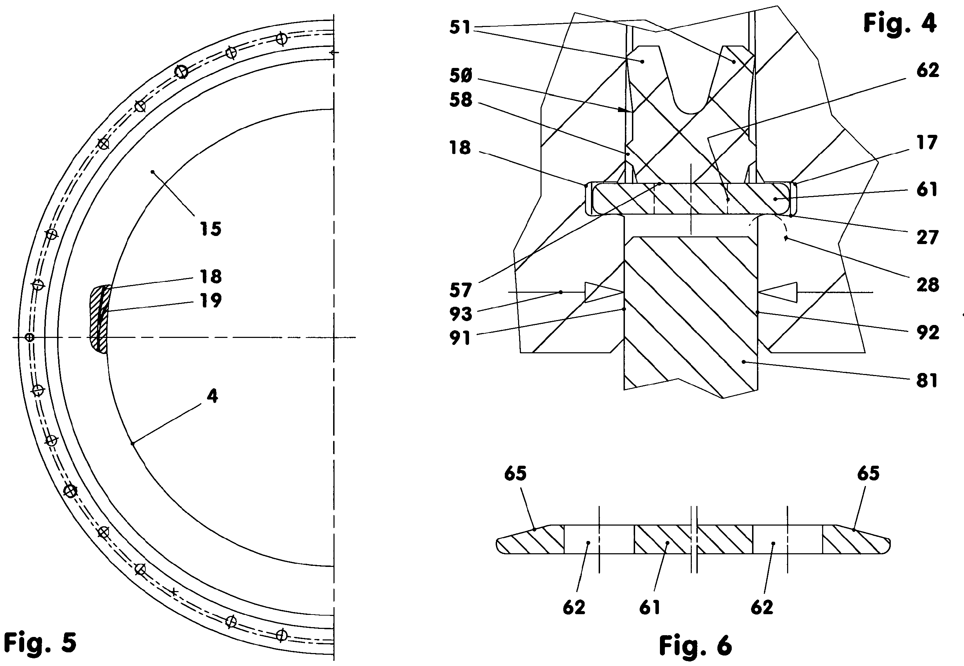

Gemäß Figur 5 weist die Axialnut (17, 18) eine Einfädelnut (19) auf. Letztere ist in jeder Biegeplatte (15, 16) nur einmal vorhanden. Sie hat einem Krümmungsradius von z.B. 30 bis 60 mm. Im Ausführungsbeispiel beträgt der Krümmungsradius 40 mm. Die einzelne Einfädelnut (19) geht tangential in die entsprechende Axialnut (17, 18) über. Der Querschnitt der Einfädelnut (19) entspricht dem der einzelnen Axialnut (17, 18).

In der Axialnut (17, 18) ist als Stützelement (60) ein elastisch verformbarer metallischer Stützstreifen (61) eingelegt, der z.B. aus dem kaltgewalzten Federbandstahl Ck 101 oder aus dem naturharten Federstahl 38 Si 6 gefertigt ist. Der Stützstreifen (61) hat eine Länge, die der mittleren Länge der einzelnen Axialnut (17, 18) abzüglich eines Spiels von 1 mm entspricht. Bei einer Wandstärke von z.B. 1 mm hat er eine Breite von z.B. 6,9 mm. Nach den Figuren 1, 2 und 4 hat der Stützstreifen (61) einen rechteckigen Querschnitt. Alle vier Kanten sind angefast oder abgerundet. Er hat in radialer und axialer Richtung - bei einem unverformten Spaltgehäuse (11) - in der Axialnut (17, 18) jeweils 0,1 mm Spiel.

Gemäß Figur 4 ist die der Bohrung (4) des Spaltgehäuses (11) nächstgelegene Nutwandung (27) eine mehrfachgekrümmte Raumfläche. Um bei einer durch Biegung des Stützstreifens (61) - quer zu seiner Längsausdehnung - eine kantenträgerfreie Auflage in der Axialnut (17, 18) zu ermöglichen, hat die Nutwandung (27) anstelle einer Zylinderfläche in der Kontaktzone eine Teilfläche (28) eines Torus, dessen Krümmung in Figur 4 gestrichelt dargestellt ist. Der kleine Querschnitt des Torus hat einen Durchmesser von z.B. 1,4 mm. Zum Nutgrund der Axialnut (17, 18) hin entfernt sich die Nutwandung (27) tangential im Anschluss an die Torusteilfläche (28) mit einer kegelstumpfmantelförmigen Fläche von der Unterseite des Stützstreifens (61).

Die Mitten der Kontaktstellen zwischen dem Stützstreifen (61) und den Nutwandungen (27) liegen bei festgeklemmter Bremsscheibe (81, 101, 121) z.B. 5,4 mm auseinander.

Der Stützstreifen (61), vgl. Figur 6, weist im Bereich seiner Enden jeweils eine Zugbohrung (62) auf, deren Durchmesser z.B. 2,5 mm misst. Die Mittellinie der einzelnen Zugbohrung (62) ist von den Enden jeweils z. B. 4 mm entfernt. Über mindestens eine Zugbohrung (62) wird der Stützstreifen (61) - in der Regel im eingebetteten Zustand und nach vorherigem Einlegen des Dichtrings - über die Einfädelnut (19) in die Axialnut (17, 18), z.B. Mithilfe eines Durchschlags, eingefädelt. Zur Demontage kann der Stützstreifen (61) ebenfalls mithilfe eines Durchschlags über die Einfädelnut (19) aus dem Spaltgehäuse (11) entfernt werden.

Zur Erleichterung des Einfädelvorgangs hat der Stützstreifen (61) vorn und hinten eine 15°-Fase (65), die sich über 2 mm der Stützstreifenlänge erstreckt. Alle vorderen Kanten sind angefast oder abgerundet.

Jede Zangenbacke (23, 24) hat zwischen der Axialnut (17) und der Bohrung (4) eine plane Reibfläche (31, 32). Die Reibflächen (31, 32), die parallel zur Mittenebene (7) orientiert sind, haben im Ausführungsbeispiel einen mittleren Radius von 113,8 mm. In der Klemmzone (22) beträgt die maximale Breite der Reibfläche (31) z. B. 3,6 mm.

Ggf. sind die Reibflächen (31, 32) auch als kegelstumpfmantelförmige Flächen ausgebildet, sodass beim Klemmen der Bremsscheibe (81, 101, 121) die Reibflächen (31, 32) vollflächig und plan an der jeweiligen Bremsscheibe anliegen.

Nach dem Zusammenbau der Brems- und/oder Klemmvorrichtung liegen die Zangenbacken der Betätigungsbaugruppe (10), bei geklemmter Brems- und/oder Klemmvorrichtung, an der jeweiligen Bremsscheibe (81, 101, 121) der entsprechenden Wellenanbindungsbaugruppe (80, 100, 120) an, vgl. Figur 2. Die Reibflächen (31, 32) beider Zangenbacken (23, 24) haben nach innen gerichtete Flächennormalen (33). Letztere zeigen in Richtung der Mittenebene (7).

Anstelle der planen Reibflächen (31, 32), die zudem parallel zur Anbaufläche (3) orientiert sind, können die Reibflächen auch die Gestalt eines Kegelstumpfmantels oder eines Teilbereiches eines Torus haben.

Radial zur Mittellinie (9) hin wird der Spalt- bzw. Druckraum (37) durch eine Doppellippendichtung (50) abgeschlossen. Die aus z.B. einem Polyurethan mit einer Shore D-Härte von 57 gefertigte Doppellippendichtung (50) hat zwei radial nach außen orientierte Dichtlippen (51), die sich jeweils an den seitlichen Wandungen des Druckraumes (37) aufgrund der eigenen Elastizität und/oder zusätzlich durch den im Druckraum (37) anstehenden Innendruck anlegen. Die Bohrungswandung (57) der Doppellippendichtung (50) liegt auf der glatten radialen Außenwandung des Stützstreifens (61) auf. Nach Figur 4 weist die Doppellippendichtung (50) ca. 1 mm oberhalb der Bohrungswandung (57) beidseits einen Stützsteg (58) auf, über den die Doppellippendichtung (50) - zur Verbesserung des Sitzes im Druckraum (37) - zusätzlich an den Innenwandungen des Spaltraums (37) anliegt.

In den Figuren 2, 3, 7 bis 9 sind als Wellenanbindungsbaugruppen (80, 100, 120) drei verschieden aufgebaute Bremsscheiben (81, 101, 121) dargestellt, die jeweils an einer sie tragenden Welle (130) befestigt sind. Dazu hat die Welle (130) einen Wellenbund (131) mit einer planen Bundfläche (132). Die Welle (130) reduziert dort ihren Durchmesser von z.B. 262 mm auf z. B. 237 mm. Sie hat unterhalb der Bundfläche (132) einen z.B. 4,5 mm breiten Zentrierabsatz (133) mit einem Durchmesser von z.B. 238 mm. Der Wellenbund (131) weist 24 äquidistant geteilte M6-Gewindebohrungen (134) auf, die auf einem Durchmesser von z.B. 249 mm liegen.

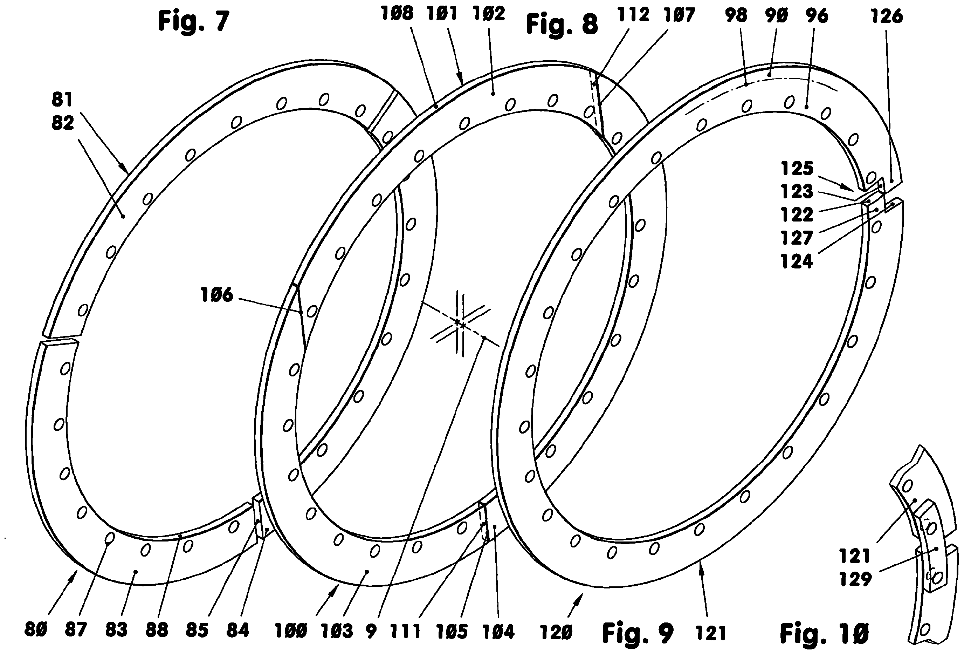

Die Figuren 7-9 zeigen drei verschiedene Bremsscheiben (81, 101, 121), deren Teile hier so angeordnet sind, wie sie gegeneinander im Einbauzustand positioniert sind. Jede Bremsscheibe ist zumindest als Hüllvolumen eine plane Scheibe mit einer Wandstärke von z.B. 4,7 mm, einer zylindermantelförmigen Innenwandung und einer zylindermantelförmigen Außenwandung. Die Innenwandung bildet die Zentrierbohrungen (88). Die großen Planflächen der Bremsscheiben (81, 101, 121) sind feinbearbeitet. Der äußere Teil der Planfläche, vgl. Figur 9, ist der Kupplungsbereich (90) der Bremsscheibe. Er teilt sich in die beiden bremsscheibenseitigen Reibflächen (91, 92) auf. Die Reibflächen (91, 92) haben nach außen gerichtete Flächennormalen (93), vgl. Figur 4. Entgegen der Richtung dieser Flächennormalen (93) ist die Klemmrichtung der Brems- und/oder Klemmvorrichtung orientiert. Der innere Teil der Planfläche der Bremsscheibe ist der Flanschbereich (96) einer jeden Bremsscheibe (81, 101, 121). Beide Bereiche werden durch die in Figur 9 hilfsweise dargestellte strichpunktierte Hilfslinie (98) getrennt.

Die Reibflächen (91, 92) oder die Reibflächen (31, 32) des Spaltgehäuses (11) können eine Oberflächenstruktur aufweisen. Beispielsweise entsteht diese durch Sandstrahlen oder durch eine Diamant- oder Saphirbeschichtung. Derartige Beschichtungen weisen eine Schichtstärke von z.B. 0,038 mm auf. Die durchschnittliche Korngröße des Beschichtungsgrundmaterials liegt bei dieser Schichtstärke bei 30 um.

Die einzelne Bremsscheibe bzw. ihr Hüllvolumen hat zur Befestigung an der Welle (130) z.B. 24 Bohrungen (87) mit einem Durchmesser von 6,4 mm.

Die Bremsscheibe (81) besteht aus drei gleichförmigen Kreisringstücken (82-84). Der Zentriwinkel misst z.B. 118,08 Winkelgrade. Demnach haben im Ausführungsbeispiel die drei Radialspalte (85) jeweils eine Spaltbreite von 4 mm. Bei dieser Variante sind die Radialspalte (85) erforderlich, um die Bremsscheibenkreisringstücke (82-84) von der Bohrung (4) aus nacheinander in das Spaltgehäuse (11) einsetzen zu können.

Auch die Bremsscheibe (101) besteht aus drei Bremsscheibenstücken (102-104). Die beiden Stücke (103, 104) sind hierbei deckungsgleich. Beide Stücke sind durch einen Radialspalt (105) getrennt, dessen Spaltbreite z.B. 0,0 bis 0,5 mm ist. Die Spaltbreite wird durch die Drahtstärke des die Bremsscheibe (101) in die drei Stücke (102-104) zerschneidenden Erodierdrahts vorgegeben. Theoretisch kann die Spaltbreite auch 0 mm betragen, sofern die Stücke (102-104) einzeln gefertigt werden.

Die Außenwandungen (108) der beiden Bremsscheibenstücke (102-104) schließen einen Winkel von z.B. 132,1 Winkelgraden ein. Dabei ist bei den Bremsscheibenstücken (103, 104) jeweils eine erste Stirnfläche nahezu eine Radialfläche (111), d.h. die Stirnfläche (111) liegt in einer Ebene, in der auch die Mittellinie (9) liegt. Die jeweils andere, zweite Stirnfläche ist eine Parallelfläche (112), die parallel zur ersten Stirnfläche (111) orientiert ist.

Zwischen den Parallelflächen (112) der Bremsscheibenstücke (103, 104) ist in Figur 8 als Mittelteil das Bremsscheibenstück (102) eingefügt. Letzteres hat ebenfalls parallel zueinander orientierte Stirnflächen, allerdings haben hier beide Stirnflächen den gleichen Flächeninhalt. Zwischen den Stirnflächen des Mittelteils (102) und der einzelnen Stirnfläche (112) des jeweils benachbarten Seitenteils (103, 104) liegt je ein Schrägspalt (106, 107). Bei dieser Bremsscheibe (101) werden zunächst die Seitenteile (103, 104) zwischen den Reibflächen (31, 32) des Spaltgehäuses (11) eingesetzt, um dann nahezu fugenfrei das Mittelteil (102) in die vorhandene Lücke einzufügen.

Die Bremsscheibe (121) ist nach Figur 9 einteilig ausgebildet. Sie bildet einen offenen Ring, dessen Trennstelle (125) aus einem zweifach abgewinkelten Spalt (122-124) besteht, sodass die Bremsscheibe (121) im einen Stirnbereich eine äußere Nase (126) und im anderen Stirnbereich eine innere Nase (127) ausbildet. Die Nasen (126, 127) überdecken sich in Umfangsrichtung um mehr als 0,1 mm. Der Spalt umfasst einen inneren Radialteilspalt (122), einen mittleren Umfangsteilspalt (124) und einen äußeren Radialteilspalt (123). Die Radialteilspalte (122, 123) grenzen an Stirnflächenbereiche, die jeweils in einer Ebene liegen, in der auch die Mittellinie (9) liegt. Die kleinste Spaltbreite des inneren Radialteilspalts (122) misst in Umfangsrichtung mindestens

$$RS = 6/5 * \pi * (d_{Ba} - d_{Gi})$$

in mm.

Sie beträgt im Ausführungsbeispiel 10,4 mm. Der mittlere Umfangsteilspalt hat eine Breite von z.B. 0,75 mm. Für die Montage der Bremsscheibe (121) wird deren Umfang vor dem Einsetzen in das Spaltgehäuse (11) - unter elastischem Verformen - so weit verkleinert, dass ihre Außenwandung (108) durch die Bohrung (4) passt.

Im elastisch verformten Zustand liegen die Nasen (126, 127) nebeneinander. Die Radialteilspalte (122, 123) haben sich auf wenige Mikrometer verkleinert. Nach dem Auffedern der Bremsscheibe (121) im Spaltgehäuse (11) nimmt diese wieder die in Figur 9 dargestellte Form an.

Die Trennstelle (125) der Bremsscheibe (121) verursacht eine auf die Welle (130) wirkende Unwucht. Um diese Unwucht auszugleichen, vgl. Figur 10, wird im Bereich der Trennstelle (125) eine kreisringstückartige Ausgleichsmasse (129) angeordnet. Letztere überdeckt den inneren Radialteilspalt (122). Die Befestigung der Ausgleichsmasse (129) erfolgt über die Schrauben (99).

Die einzelne montierte Bremsscheibe (81, 101, 121) sitzt zum einen mit ihrer Zentrierbohrung (88) auf dem Zentrierabsatz (133) der Welle (130) auf. Sie liegt zum anderen an der Bundfläche (132) an. Die z.B. 20 Schrauben (99) halten die Bremsscheiben (81, 101, 121) drehsteif am Wellenbund (131) fest.

Ausgeliefert wird diese Brems- und/oder Klemmvorrichtung in Kombination mit der gewählten Wellenanbindungsbaugruppe (80, 100, 120). Dabei sitzt die jeweilige Wellenanbindungsbaugruppe (80, 100, 120) koaxial in der Betätigungsbaugruppe (10). Für die Montage in der die Vorrichtung aufnehmenden Maschine wird die Wellenanbindungsbaugruppe (80, 100, 120) auf die Welle (130) geschoben und dort direkt an der Anbaufläche (3) des Grundkörpers (1) anstehend - in der Regel lösbar - befestigt. Abschließend werden die Befestigungsschrauben in die entsprechenden grundkörperseitigen Bohrungen eingesetzt und dort verschraubt.

Steht im Druckraum (37) kein Hydraulikölbetriebsdruck an, so ist die Welle (130) gegenüber dem Grundkörper (1) festgeklemmt. Der Druckraum (37) weist keinen nennenswerten Öldruck auf, da der Ölzulauf über ein nicht dargestelltes Ventil in den Öltank entlastet ist. Die Biegeplatten (15, 16) liegen vorgespannt über ihre Zangenbacken (23, 24) an der Bremsscheibe (81, 101, 121) an, vgl. Figur 2. Die Vorspannung ergibt sich aus der Federrate der vorgebeulten Biegeplatten (15, 16). Die Höhe der Federrate ist eine Funktion der ringscheibenseitigen Werkstoffauswahl und der Geometrie der Biegezone (21). Das erzeugte Brems- bzw. Haltemoment liegt bei den Ausführungsbeispielen bei 3000 ± 200 Nm.

Die Biegeplatten (15, 16) befänden sich nur dann im vollständig entspannten Zustand, wenn keine Bremsscheibe (81, 101, 121) zwischen den Zangenbacken (23, 24) läge. Dann wäre im Ausführungsbeispiel der Druckraum (37) ein Spaltraum mit konstanter Spaltbreite.

Um die Brems- und/oder Klemmvorrichtung zu lösen, wird z.B. über den Hydraulikadapter (56), vgl. Figur 3, der Öldruck im Druckraum (37) auf z.B. 100 bis 150 * 10$^5$ Pa erhöht. Vom Hydraulikadapter (56) aus pflanzt sich die Druckerhöhung über die Verteilbohrungen (42) und (43) in den Druckraum (37) fort. Die Biegeplatten (15, 16) beulen in den elastischen Biegezonen (21), vgl. Figur 3. Dabei wandert jede Klemmzone (22) gegenüber der ortsfest bleibenden Anbauzone (13) im Wesentlichen in Axialrichtung nach außen. Die Zangenbacken (23, 24) heben in Richtung der Pfeile (47) von der Bremsscheibe (81, 101, 121) ab. Die betätigungsbaugruppenseitigen Reibflächen (31, 32) entfernen sich von den wellenanbindungsbaugruppenseitigen Reibflächen (91, 92), so dass zwischen der Welle (130) und dem Grundkörper (1) kein Kontakt mehr besteht. Das Lüftspiel pro Reibflächenpaarung (31) zu (91) und (32) zu (92), also der Abstand zwischen den zuvor sich kontaktierenden Reibflächen, beträgt nun zwischen 0,3 und 0,5 mm. Die Vorrichtung ist auf 5 bis 10 Millionen Öffnungs- bzw. Schließzyklen ausgelegt.

Bezugszeichenliste:

| | |
|---|---|
| 1 | Grundkörper |
| 2 | Zentrierung, Außenzentrierung |
| 3 | Anbaufläche von (1) |
| 4 | Bohrung, zentral von (10) |
| 7 | Mittenebene |
| 8 | fiktive Achse, vertikal, liegt in (7) |
| 9 | Mittellinie der Vorrichtung, zentral |
| 10 | Betätigungsbaugruppe |
| 11 | Spaltgehäuse, bereichsweise beulbar |
| 12 | Vorderseite, Stirnseite |
| 13 | Anbauzone |
| 14 | Außenwandung, Stirnwandung, Stirnseite |
| 15 | Biegeplatte, außen |
| 16 | Biegeplatte, innen |
| 17 | Axialnut in (15) |
| 18 | Axialnut in (16) |
| 19 | Einfädelnut |
| 21 | Biegezonen, beulbar, elastisch |
| 22 | Klemmzonen |
| 23 | Zangenbacke, angeformt, rechts |
| 24 | Zangenbacke, angeformt, links |
| 27 | Nutwandung |
| 28 | Torusteilfläche |
| 31, 32 | Reibflächen |
| 33 | Flächennormalen von (31, 32) |
| 36 | Feinbearbeitungszone |
| 37 | Druckraum; Spaltraum; Nut |
| 41 | Zulaufgewindebohrungen |
| 42 | Verteilbohrung, radial |
| 43 | Verteilbohrung, axial |
| 45 | Bohrungen, Befestigungsbohrungen |
| 46 | Gewindedurchgangsbohrungen |
| 47 | Pfeile, Bewegungsrichtung |
| 48 | Hydraulikölzulauf |
| 49 | Schneidring |
| 50 | Doppellippendichtung, Dichtring |
| 51 | Dichtlippen |
| 52 | Verschlussstopfengewindebohrung |
| 53 | Klemmbüchse |
| 54 | Stauchkugel |
| 55 | Verschlussstopfen |
| 56 | Hydraulikadapter |
| 57 | Bohrungswandung von (50) |
| 58 | Stützstege |
| 60 | Stützelement |
| 61 | Stützstreifen |
| 62 | Zugbohrung, Querbohrung |
| 65 | 15°-Fase |
| 80 | Wellenanbindungsbaugruppe, radiale Teilung |
| 81 | Bremsscheibe, dreiteilig, radial geteilt; Ring |
| 82-84 | Bremsscheibenkreisringstücke, Teilstücke |
| 85 | Radialspalte |
| 86 | Montagefugen |
| 87 | Bohrungen |
| 88 | Zentrierbohrung |
| 90 | Kupplungsbereich |
| 91, 92 | Reibflächen |
| 93 | Flächennormalen von (91, 92) |
| 96 | Flanschbereich |
| 98 | Hilfslinie |
| 99 | Schrauben |
| 100 | Wellenanbindungsbaugruppe, gemischte Teilung |
| 101 | Bremsscheibe, dreiteilig, gemischt geteilt; Ring |
| 102 | Mittelteil, Bremsscheibenstück, Teilstück |
| 103, 104 | Seitenteile, Bremsscheibenstücke, Teilstücke |
| 105 | Radialspalt |
| 106, 107 | Schrägspalt |
| 108 | Außenwandung, zylindermantelförmig |
| 111 | Stirnfläche, erste; Radialfläche |
| 112 | Stirnfläche, zweite; Parallelfläche |
| 120 | Wellenanbindungsbaugruppe, einfachgeschlitzt |
| 121 | Bremsscheibe, stufengeschlitzter; Ring |
| 122 | Radialteilspalt, innen |
| 123 | Radialteilspalt, außen |
| 124 | Umfangsteilspalt, Mitte |
| 125 | Trennstelle |
| 126 | Nase, außen |
| 127 | Nase, innen |
| 129 | Ausgleichsmasse |
| 130 | Welle |
| 131 | Wellenbund |
| 132 | Bundfläche, plan |
| 133 | Zentrierabsatz |
| 134 | M6-Gewindebohrungen |
| RS | mittlere Radialteilspaltbreite |
| $d_{Ba}$ | Außendurchmesser der Bremsscheibe (121) |
| $d_{Gi}$ | Bohrungsdurchmesser (4) des Spaltgehäuses (11) |

## Patentansprüche

1. Brems- und/oder Klemmvorrichtung für eine gegenüber einem Grundkörper (1) geführte Welle (130) mit einer Betätigungsbaugruppe (10) und mit einer Wellenanbindungsbaugruppe (80, 100, 120),

   - wobei die Betätigungsbaugruppe (10) ein Spaltgehäuse (11) aufweist, das eine Anbauzone (13) und eine bereichsweise elastisch beulbare Biegezone (21) mit zwei über einen Spaltraum (37) beabstandete Biegeplatten (15, 16) hat,
   - wobei die Biegeplatte (15, 16) in zwei einander gegenüberliegenden Klemmzonen (22) jeweils Zangenbacken (23, 24) mit Reibflächen (31, 32) aufweisen, deren Flächennormalen (33) nach innen gerichtet sind,
   - wobei die Wellenanbindungsbaugruppe (80, 100, 120) einen Kupplungsbereich (90) aufweist, der zwei voneinander beabstandete Reibflächen (91, 92) hat, deren Flächennormalen (93) nach au-ßen weisen,
   - wobei die Wellenanbindungsbaugruppe (80, 100, 120) einen Flanschbereich (96) aufweist, über den sie entweder direkt oder indirekt über einen Spannmechanismus an der Welle (130) angeordnet ist und
   - wobei bei entlastetem Spaltraum (37) die Reibflächen (31, 32) der Betätigungsbaugruppe (10) an den Reibflächen (91, 92) der Wellenanbindungsbaugruppe (80, 100, 120) unter Bereitstellung der Klemm- und/oder Bremskraft angelegt sind,
   **dadurch gekennzeichnet,**
   - **dass** jede Biegeplatte (15, 16) - zur Lagerung mindestens eines Stützelements (60) - vom Spaltraum (37) aus eine Axialnut (17, 18) aufweist,
   - **dass** zwischen den Biegeplatten (15, 16) und dem mindestens einen Stützelement (60) ein abgedichteter Spaltraum (37) liegt, der zum elastischen Auseinanderdrücken der Reibflächen (31, 32) mit einem Druckmedium befüllbar ist und
   - **dass** die Wellenanbindungsbaugruppe (80, 100, 120) als Bremsscheibe (81, 101, 121) einen geschlitzten oder mehrfach geteilten Ring aufweist.

2. Brems- und oder Klemmvorrichtung gemäß Anspruch 1, **dadurch gekennzeichnet, dass** die Axialnuten (17, 18) der Biegeplatten (15, 16) im Bereich zwischen den Reibflächen (31, 32) und dem Grund des Spaltraumes (37) angeordnet sind.

3. Brems- und oder Klemmvorrichtung gemäß Anspruch 1, **dadurch gekennzeichnet, dass** das Stützelement (60) ein elastisch verformbarer metallischer Stützstreifen (61) ist, dessen Länge der mittleren Länge der einzelnen Axialnut (17, 18) entspricht.

4. Brems- und oder Klemmvorrichtung gemäß Anspruch 3, **dadurch gekennzeichnet, dass** der Stützstreifen (61) - zumindest im Bereich eines Endes - eine Querbohrung (62) aufweist.

5. Brems- und oder Klemmvorrichtung gemäß Anspruch 3, **dadurch gekennzeichnet, dass** die einzelne Axialnut (17, 18) eine Einfädelnut (19) aufweist, die in sie einmündet.

6. Brems- und oder Klemmvorrichtung gemäß Anspruch 1, **dadurch gekennzeichnet, dass** die einzelne Bremsscheibe (81, 101, 121) oder deren Teilstücke (82-84; 102-104) beidseitig plan sind.

7. Brems- und oder Klemmvorrichtung gemäß Anspruch 1, **dadurch gekennzeichnet, dass** die Bremsscheibe (81) aus mindestens drei gleich großen Bremsscheibenkreisringstücken (82-84) besteht, wobei die zwischen den Bremsscheibenkreisringstücken (82-84) gelegenen Montagefugen (86) eine Spaltbreite von mindestens 4 mm haben.

8. Brems- und oder Klemmvorrichtung gemäß Anspruch 1, **dadurch gekennzeichnet, dass** die Bremsscheibe (101) aus mindestens drei Bremsscheibenstücken (102-104) besteht, die die gleiche Masse haben, wobei die kürzesten Verbindungslinien zwischen Vorrichtungsmittellinie (9) und zwei benachbarten Massenschwerpunkten jeweils den gleichen Winkel einschließen.

9. Brems- und oder Klemmvorrichtung gemäß Anspruch 1, **dadurch gekennzeichnet, dass** die Bremsscheibe (121) eine gestufte Trennstelle (125) aufweist, deren Radialteilspalt (122) in Umfangsrichtung eine Breite von mindestens

$$RS = 6/5 * \pi * (d_{Ba} - d_{Gi})$$

in mm hat. Dabei ist RS die mittlere Radialteilspaltbreite, $d_{Ba}$ der Außendurchmesser der Bremsscheibe (121) und $d_{Gi}$ der Bohrungsdurchmesser (4) des Spaltgehäuses (11).

## Claims

1. A braking and/or clamping device for a shaft (130) which is guided relative to a main body (1), having an actuating assembly (10) and a shaft coupling assembly (80, 100, 120),

- wherein the actuating assembly (10) has a split housing (11), which has an attachment zone (13) and a bending zone (21) which can bulge elastically in some regions and has two bending plates (15, 16) spaced by a gap space (37),
- wherein the bending plates (15, 16) each have jaws (23, 24) in two mutually opposing clamping zones (22), said jaws having friction faces (31, 32) with surface normals (33) pointing inwards,
- wherein the shaft coupling assembly (80, 100, 120) has a coupling region (90) which has two mutually spaced friction faces (91, 92) with surface normals (93) pointing outwards,
- wherein the shaft coupling assembly (80, 100, 120) has a flange region (96) via which it is arranged on the shaft (130) either directly or indirectly via a clamping mechanism, and
- wherein, when the gap space (37) is relieved of load, the friction faces (31, 32) of the actuating assembly (10) are applied to the friction faces (91, 92) of the shaft coupling assembly (80, 100, 120), providing the clamping and/or braking force,

**characterised in that**
- each bending plate (15, 16) has an axial groove (17, 18) from the gap space (37) in order to support at least one supporting element (60),
- there is a sealed gap space (37) between the bending plates (15, 16) and the at least one supporting element (60), which sealed gap space can be filled with a pressure medium in order to push the friction faces (31, 32) apart elastically, and
- the shaft coupling assembly (80, 100, 120) has a slotted or multiply split ring as the brake disc (81, 101, 121).

2. The braking and/or clamping device according to Claim 1, **characterised in that** the axial grooves (17, 18) of the bending plates (15, 16) are arranged in the region between the friction faces (31, 32) and the bottom of the gap space (37).

3. The braking and or clamping device according to Claim 1, **characterised in that** the supporting element (60) is an elastically deformable metallic supporting strip (61), the length of which corresponds to the average length of the individual axial groove (17, 18).

4. The braking and or clamping device according to Claim 3, **characterised in that** the supporting strip (61) has a transverse bore (62) at least in the region of one end.

5. The braking and/or clamping device according to Claim 3, **characterised in that** the individual axial groove (17, 18) has a feed-in groove (19) which leads therein.

6. The braking and/or clamping device according to Claim 1, **characterised in that** the individual brake disc (81, 101, 121) or parts (82-84; 102-104) thereof are flat on both sides.

7. The braking and/or clamping device according to Claim 1, **characterised in that** the brake disc (81) consists of at least three brake disc circular ring parts (82-84) of equal size, wherein the mounting joins (86) situated between the brake disc circular ring parts (82-84) have a gap width of at least 4 mm.

8. The braking and/or clamping device according to Claim 1, **characterised in that** the brake disc (101) consists of at least three brake disc parts (102-104) which have the same mass, wherein the shortest connecting lines between the device centre line (9) and two adjacent centres of mass in each case form the same angle.

9. The braking and/or clamping device according to Claim 1, **characterised in that** the brake disc (121) has a stepped separating point (125), the radial partial gap (122) of which has, in the circumferential direction, a width of at least

$$RS = 6/5 * \pi * (d_{Ba} - d_{Gi})$$

in mm, where RS is the average radial partial gap width, $d_{Ba}$ is the outer diameter of the brake disc (121), and $d_{Gi}$ is the bore diameter (4) of the split housing (11).

**Revendications**

1. Dispositif de freinage et / ou de serrage pour un arbre (130) guidé par rapport à un corps de base (1), pourvu d'un module d'actionnement (10) et pourvu d'un module d'accouplement (80, 100, 120) d'arbre,

- le module d'actionnement (10) comportant un boîtier à interstice (11), qui comprend une zone de montage (13) et une zone de flexion (21) élastiquement bombable par endroits, pourvue de deux plaques de flexion (15, 16) écartées par l'intermédiaire d'un espace interstitiel (37),
- les plaques de flexion (15, 16) comportant dans deux zones de serrage (22) mutuellement opposées chaque fois des mâchoires de pince (23, 24) pourvues de surfaces de friction (31, 32), dont les normales à la surface (33) sont dirigées vers l'intérieur,
- le module d'accouplement (80, 100, 120) d'arbre comportant une partie de couplage (90) qui comprend deux surfaces de friction (91, 92) écartées l'une de l'autre, dont les normales à la surface (93) sont dirigées vers l'extérieur,

- le module d'accouplement (80, 100, 120) d'arbre comportant une partie en bride (96) par l'intermédiaire de laquelle il est placé directement ou indirectement sur l'arbre (130) par l'intermédiaire d'un mécanisme de tension et

- lorsque l'espace interstitiel (37) n'est pas chargé, les surfaces de friction (31, 32) du module d'actionnement (10) étant posées sur les surfaces de friction (91, 92) du module d'accouplement (80, 100, 120) d'arbre, en mettant à disposition la force de serrage et / ou de freinage, **caractérisé**

- **en ce que** chaque plaque de flexion (15, 16) comporte, pour loger au moins un élément de soutien (60), à partir de l'espace interstitiel (37) une rainure axiale (17, 18),

- **en ce qu'**entre les plaques de flexion (15, 16) et l'au moins un élément de soutien (60) se situe un espace interstitiel (37) étanchéifié, qui pour repousser élastiquement l'une de l'autre les surfaces de friction (31, 32) peut se remplir d'un fluide sous pression et

- **en ce que** le module d'accouplement (80, 100, 120) d'arbre comporte en tant que disque de frein (81, 101, 121) une bague fendue ou plusieurs fois divisée.

2. Dispositif de freinage et / ou de serrage selon la revendication 1, **caractérisé en ce que** les rainures axiales (17, 18) des plaques de flexion (15, 16) sont placées dans la région entre les surfaces de friction (31, 32) et le fond de l'espace interstitiel (37).

3. Dispositif de freinage et / ou de serrage selon la revendication 1, **caractérisé en ce que** l'élément de soutien (60) est une bande de soutien (61) métallique, élastiquement déformable, dont la longueur correspond à la longueur centrale de la rainure axiale (17, 18) individuelle.

4. Dispositif de freinage et / ou de serrage selon la revendication 3, **caractérisé en ce que** la bande de soutien (61) comporte, au moins dans la région d'une extrémité, un perçage transversal (62).

5. Dispositif de freinage et / ou de serrage selon la revendication 3, **caractérisé en ce que** la rainure axiale (17, 18) individuelle comporte une rainure d'enfilage (19), qui débouche dans elle.

6. Dispositif de freinage et / ou de serrage selon la revendication 1, **caractérisé en ce que** le disque de frein (81, 101, 121) individuel ou ses pièces partielles (82 à 84 ; 102 à 104) sont plan(e)s de part et d'autre.

7. Dispositif de freinage et / ou de serrage selon la revendication 1, **caractérisé en ce que** le disque de frein (81) est constitué d'au moins trois pièces de disque de frein (82 à 84) en anneaux circulaires de même dimension, les joints de montage (86) situés entre les pièces de disque de frein (82 à 84) en anneaux circulaires ayant une largeur d'interstice d'au moins 4 mm.

8. Dispositif de freinage et / ou de serrage selon la revendication 1, **caractérisé en ce que** le disque de frein (101) est constitué d'au moins trois pièces (102 à 104) de disque de frein, qui sont de masse identique, les lignes de liaison les plus courtes entre la ligne médiane (9) du dispositif et deux centres de masse voisins incluant chaque fois le même angle.

9. Dispositif de freinage et / ou de serrage selon la revendication 1, **caractérisé en ce que** le disque de frein (121) comporte un point de séparation (125) étagé, dont l'interstice partiel (122) radial présente dans la direction périphérique une largeur d'au moins

$$RS = 6/5 * \pi * (d_{Ba} - d_{Gi}),$$

dont RS est la largeur moyenne de l'interstice radial partiel, $d_{Ba}$ est le diamètre extérieur du disque de frein (121) et $d_{Gi}$ est le diamètre du perçage (4) du boîtier à interstice (11).

Fig. 1

EP 3 891 411 B1

52  55  7  54  53

10
11
13
42
43
15
16
21
51
50

60
22
23
4
81
80
99

33  99  24  4  87

**Fig. 2**

1  2  3  42  41  56  48

49
43
37
31
18
36
17
91
47
32
90

96

134  92

132
133

131
130

9

**Fig. 3**

12

EP 3 891 411 B1

**Fig. 4**

62
17
61
27
28
92
81

51
50
58
18
57
93
91

65

62
61
62

65

**Fig. 6**

15
18
19
4

**Fig. 5**

13

Fig. 7

Fig. 8

Fig. 9

Fig. 10

EP 3 891 411 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016009581 B3
- DE 102017004403 B4
- DE 2106009 A1